# EUROPÄISCHE PATENTANMELDUNG

(11) **EP 4 803 409 A1**
(43) Veröffentlichungstag der Anmeldung: **09.09.2026**
(21) Anmeldenummer: 26162472.0
(22) Anmeldetag: 05.03.2026
(51) Int. Cl.: B62D 35/00

(54) **LKW-FAHRZEUGANHÄNGER MIT BEWEGLICHER SEITENVERKLEIDUNG**

(30) Priorität: 05.03.2025 DE 202025101188 U
(71) Anmelder: System Trailers Fahrzeugbau GmbH, 49767 Twist (DE)
(72) Erfinder: Saatkamp, Ralf, 49808 Lingen (DE)
(74) Vertreter: Patentanwälte Olbricht Buchhold Keulertz

(57) **Zusammenfassung**

Bei einem Lkw-Fahrzeuganhänger, mit einem Ladeboden und Hinterrädern, sowie mit einer Seitenverkleidung, die an der Längsseite des Fahrzeuganhängers tiefer als der Ladeboden angeordnet ist und sich in Längsrichtung bis vor die Hinterräder erstreckt, schlägt die Erfindung vor, dass die Seitenverkleidung einen oberen Abschnitt und einen unteren Abschnitt aufweist, wobei der untere Abschnitt zwischen einer Fahrstellung, welche für den Fahrbetrieb des Fahrzeuganhängers bestimmt ist, und einer Ladestellung in der Art beweglich ist, dass der untere Abschnitt aus seiner Fahrstellung weiter nach innen und / oder oben in seine Ladestellung verlagerbar ist.

## Beschreibung

Die Erfindung betrifft einen Lkw-Fahrzeuganhänger mit einem Ladeboden und Hinterrädern, sowie mit einer Seitenverkleidung, die an der Längsseite des Fahrzeuganhängers tiefer als der Ladeboden angeordnet ist und sich in Längsrichtung bis vor die Hinterräder erstreckt.

Lkw-Fahrzeuganhänger werden im Gebrauch von einer Lkw-Zugmaschine gezogen. Sie weisen, wenn sie als Auflieger ausgestaltet sind, ausschließlich Hinterräder auf, an einer oder an mehreren Hinterachsen, können je nach konstruktiver Ausgestaltung aber auch mit einer Vorderachse und dementsprechend mit Vorderrädern und einer Deichsel ausgestattet sein. Ein Aufbau dient dazu, die Ladung aufzunehmen. Der Aufbau kann als Kastenaufbau mit einem festen Gehäuse ausgestaltet sein, oder als Curtainsider mit einer flexiblen Seitenwand, die beispielsweise aus einer sogenannten Lkw-Plane bestehen kann. Nachfolgend werden die Lkw-Fahrzeuganhänger auch kurz als Fahrzeuganhänger oder nur Anhänger bezeichnet.

Zur Verbesserung der Aerodynamik des Anhängers ist es bekannt, an den Längsseiten des Anhängers eine Seitenverkleidung anzuordnen, die sich z. B. vom Ladeboden oder von einem auf Höhe des Ladeboden verlaufenden Fahrzeugrahmen aus nach unten erstreckt.

Die Anhänger weisen üblicherweise einen Seitenanfahrschutz auf, der sich an den beiden Längsseiten des Anhängers erstreckt und unterhalb des Aufbaus - z. B. unterhalb eines ebenen Ladebodens - nach unten ragt. Der Seitenanfahrschutz ist typischerweise gitterartig ausgestaltet und besteht aus liegend verlaufenden Streben, die mittels aufrecht verlaufender Halter gehalten sind. Die Seitenverkleidung kann den Seitenanfahrschutz aerodynamisch vorteilhaft nach außen hin abdecken, zudem kann sie unterhalb des Seitenanfahrschutzes nach innen hin, in Richtung zur Längsmittelachse des Anhängers, eingezogen sein, was nicht nur aerodynamisch vorteilhaft ist, sondern auch Kollisionen mit Flurförderfahrzeugen zu vermeiden hilft. Dabei sind weniger die möglichen Kollisionen mit der Gabel des jeweiligen Flurförderfahrzeugs von Bedeutung, sondern die Möglichkeit, dass das Gehäuse z. B. eines Gabelstaplers gegen die Seitenverkleidung geraten kann, wenn der Gabelstapler im Bogen seitlich an den Ladeboden heran oder von diesem weg fährt.

Der Erfindung liegt die Aufgabe zugrunde, einen möglichst wirtschaftlichen Betrieb des Lkw-Fahrzeuganhängers dadurch zu ermöglichen, dass die aerodynamisch vorteilhaft weit nach unten ragende Seitenverkleidung möglichst sicher vor Beschädigungen geschützt ist.

Erfindungsgemäße Merkmale sind im Anspruch 1 angegeben. Ausgestaltungen sind Gegenstand der Unteransprüche.

Die Erfindung schlägt vor, dass die Seitenverkleidung einen oberen Abschnitt und einen unteren Abschnitt aufweist, wobei der untere Abschnitt zwischen einer Fahrstellung, welche für den Fahrbetrieb des Fahrzeuganhängers bestimmt ist, und einer Ladestellung in der Art beweglich ist, dass der untere Abschnitt aus seiner Fahrstellung weiter nach innen und / oder oben in seine Ladestellung verlagerbar ist. Die Seitenverkleidung kann dabei vor dem Hinterrad des Anhängers angeordnet oder hinter dem Hinterrad. Falls sowohl vor als auch hinter dem Hinterrad eine Seitenverkleidung angeordnet ist, sind vorteilhaft beide erfindungsgemäß ausgestaltet, um einerseits den Anhänger eine möglichst gute Aerodynamik zu ermöglichen als auch einen möglichst guten Schutz der Seitenverkleidungen sicherzustellen.

Mit anderen Worten ist erfindungsgemäß vorgesehen, dass der untere Abschnitt der Seitenverkleidung eine bestimmte Stellung - nämlich seine so genannte Fahrstellung - einnimmt, in der er aerodynamisch vorteilhaft die Seitenverkleidung nach unten verlängert und weiter nach unten ragt als deren oberer Abschnitt. Dies ist für den Fahrbetrieb des Anhängers vorgesehen, wenn sich der Anhänger also in Fahrt befindet. Wenn der Anhänger jedoch be- oder entladen werden soll und sich dementsprechend nicht in Fahrt befindet, kann der untere Abschnitt der Seitenverkleidung aus seiner Fahrstellung in eine besser geschützte Ladestellung verlagert werden, in welcher er nämlich entweder weiter innen, zur Fahrzeuglängsmittelachse hin, und / oder weiter oben angeordnet ist als in seiner Fahrstellung.

Beispielsweise kann die Beweglichkeit des unteren Abschnitts dadurch gegeben sein, dass dieser scharnierartig aufgehängt und schwenkbar gelagert ist, so dass er aus einer z.B. senkrecht nach unten hängenden Fahrstellung sowohl nach innen als auch gleichzeitig nach oben in eine z.B. waagerecht liegende Ladestellung geschwenkt werden kann. Oder der untere Abschnitt kann an einem oder mehreren Zugelementen aufgehängt sein und aus seiner unteren Fahrstellung in eine demgegenüber höhere Ladestellung angehoben werden. Falls dies nicht durch Bauteile des Anhängers behindert wird, kann auch vorgesehen sein, dass der untere Abschnitt auf im Wesentlichen der gleichen Höhe in Richtung zur Längsmittelachse des Anhängers bewegt wird oder sowohl nach innen als auch nach oben ansteigend bewegt wird.

Bei der erwähnten Schwenkbewegung bewegt sich der untere Abschnitt der Seitenverkleidung entlang einer vorbestimmten Bahnkurve, auch wenn die Schwenkachse ortsfest verbleibt, z. B. entlang der Oberkante des unteren Abschnitts verläuft. Für eine andere Beweglichkeit wie z. B. die oben erwähnten Bewegungen kann eine Führung des unteren Abschnitts entlang einer definierten Bahnkurve z.B. mittels Führungsprofilen erfolgen, die entlang dieser Bahnkurve verlaufen, wobei Führungselemente des unteren Abschnitts entlang der Führungsprofile beweglich sind- Beispielsweise können Führungszapfen in die Führungsprofile eingreifen oder Führungsklauen die Führungsprofile außen umfassen.

Die Möglichkeit, den unteren Abschnitt der Seitenverkleidung aus der Fahrstellung in die Ladestellung bewegen zu können, verringert die Wahrscheinlichkeit einer Beschädigung des unteren Abschnitts durch Gabelstapler während der Be- oder Entladevorgänge. Dies gilt insbesondere auch für so genannte Mitnahmestapler, die als Teil der Ladung mit dem Fahrzeuganhänger mitgeführt werden und deren Vorderräder je nach Bauart auch unterhalb der Gabelzinken weit nach vorn ragen können, so dass sie beim Annähern an den Ladeboden des Anhängers eine besonders hohe Kollisionsgefahr mit einem weit nach unten reichenden unteren Abschnitt einer Seitenverkleidung begründen.

Um den unteren Abschnitt zwischen der Fahrstellung und der Ladestellung zu bewegen, kann die dafür erforderliche Kraft manuell aufgebracht werden, beispielsweise mittels eines Seilzug- oder Kurbelantriebs oder dergleichen. Durch entsprechende Übersetzungsverhältnisse in dem betreffenden Antriebsstrang können die erforderlichen Bedienkräfte gering gehalten werden, was jedoch einen längeren Weg oder eine höhere Anzahl von Umdrehungen bei der Betätigung des Antriebs und dementsprechend mehr Zeit erfordert. Alternativ dazu kann der Lkw-Anhänger in der Art ausgestaltet sein, dass der untere Abschnitt fremdkraftunterstützt zwischen der Fahrstellung und der Ladestellung beweglich ist. Auf diese Weise muss die Kraft, die zum Bewegen des unteren Abschnitts erforderlich ist, nicht ausschließlich durch eine Person aufgebracht werden, sondern die Kraft wird zumindest anteilig, gegebenenfalls sogar vollständig, durch Fremdmittel bereitgestellt, z. B. elektromotorisch, pneumatisch oder hydraulisch.

Die Bewegung des unteren Abschnitts der Seitenverkleidung kann von einer Person ausgelöst werden. Alternativ dazu kann, falls der untere Abschnitt fremdkraftunterstützt beweglich ist, der Lkw-Anhänger in der Art ausgestaltet sein, dass der untere Abschnitt sensorgesteuert automatisch zwischen der Fahrstellung und der Ladestellung beweglich ist. Beispielsweise kann ein Sensor genutzt werden, der am Fahrzeuganhänger oder an einer Zugmaschine ohnehin vorhanden ist, beispielsweise ein Geschwindigkeitssensor oder ein Sensor eines Bremsen-Antiblockiersystems, so dass mittels einer Steuerungselektronik automatisch erfasst werden kann, dass sich der Fahrzeuganhänger in Fahrt befindet. Mittels der Steuerungselektronik kann dann automatisch die erwähnte Fremdkraft freigeschaltet werden, um den unteren Abschnitt der Seitenverkleidung automatisch aus der Ladestellung in seine Fahrstellung zu bewegen. Auf diese Weise ist sichergestellt, dass die aerodynamischen Vorteile der Seitenverkleidung vollumfänglich genutzt werden und nicht versehentlich der untere Abschnitt während der Fahrt in seiner Ladestellung verbleibt.

Falls der untere Abschnitt sensorgesteuert automatisch fremdkraftunterstützt beweglich ist, kann der Lkw-Anhänger in der Art ausgestaltet sein, dass der Lkw-Fahrzeuganhänger zur Mitnahme eines Mitnahmestaplers eingerichtet ist und eine Aufnahme für den Mitnahmestapler aufweist, sowie einen Sensor aufweist, der dazu eingerichtet ist, die An- oder Abwesenheit des Mitnahmestaplers in der Aufnahme zu erfassen. Beschädigungen, die durch den Mitnahmestapler an dem unteren Abschnitt der Seitenverkleidung verursacht werden könnten, können sicher vermieden werden, indem der untere Abschnitt automatisch in seine Ladestellung bewegt wird, sobald der Mitnahmestapler aus seiner Aufnahme entfernt wird. Ebenso kann der untere Abschnitt automatisch in die aerodynamisch vorteilhafte Fahrstellung bewegt werden, sobald durch den Sensor detektiert worden ist, dass sich der Mitnahmestapler in seiner Aufnahme befindet.

Der Lkw-Fahrzeuganhängers kann dazu eingerichtet sein, dass zur Bewegung des unteren Abschnitts erforderliche Betätigungselemente in der Art ausgestaltet sind, dass sich der untere Abschnitt in der Fahrstellung befinden muss, um den Fahrbetrieb des Lkw-Fahrzeuganhängers zu ermöglichen. Die oben erwähnte Ausgestaltung des Anhängers mit einem Sensor und mit einem ausschließlich fremdkraftbetätigten, automatisch bewegbaren unteren Abschnitt stellt dies sicher. Aber auch im Falle einer manuellen Betätigung des unteren Abschnitts kann es zu Gunsten eines möglichst energieeffizienten Fahrbetriebs vorteilhaft sein, sicherzustellen, dass sich während der Fahrt der untere Abschnitt in seiner aerodynamisch vorteilhaften Fahrstellung befindet.

Um dies sicherzustellen, kann ein Element wie beispielsweise ein Betätigungselement in Form einer Kurbel, eines Hebels oder dergleichen, oder eine am unteren Abschnitt angebrachte Störkontur wie z.B. ein Stab, eine an den unteren Abschnitt an geformte Lasche oder dergleichen in der Art ausgestaltet sein, dass dieses Element den Fahrbetrieb des Anhängers verhindert, wenn sich der untere Abschnitt in seiner Ladestellung befindet. Beispielsweise können durch das Element elektrische, hydraulische, pneumatische oder andere Anschlüsse verdeckt sein, mittels derer der Anhänger mit einem Zugfahrzeug verbunden sein muss, um den Fahrbetrieb des Anhängers zu ermöglichen. Oder das Element erfordert für die Bewegung des unteren Abschnitts, dass eine für den Fahrbetrieb erforderliche Verbindung des Anhängers zum Zugfahrzeug getrennt werden muss, so dass diese Verbindung erst wiederhergestellt und ein Fahrbetrieb des Anhängers ermöglicht werden kann, nachdem der untere Abschnitt der Seitenverkleidung aus seiner Ladestellung zurück in die Fahrstellung verbracht worden ist.

Der Lkw-Fahrzeuganhängers kann in der Art ausgestaltet sein, dass der untere Abschnitt in seiner Fahrstellung mithilfe von Feststellmitteln festlegbar ist. Auf diese Weise ist sichergestellt, dass der untere Abschnitt nicht allein von äußeren Einwirkungen wie Wind, Turbulenzen oder anderweitigen Einflüssen aus seiner aerodynamisch gewünschten Stellung herausbewegt werden kann, sondern nur ganz bewusst daraus entfernt werden kann, nachdem die Feststellmittel gelöst worden sind.

Die Feststellmittel können manuell betätigbar ausgestaltet sein, beispielsweise als schwenkbare oder längsverschiebbare Riegel, mittels welcher der untere Abschnitt an benachbarten Bauteilen des Anhängers unbeweglich festgelegt werden kann, wenn er sich in seiner Fahrstellung befindet.

Die Feststellmittel können automatisch einrastend ausgestaltet sein, beispielsweise in Art eines Schnappverschlusses oder Schnappriegels, so dass die Verriegelung automatisch erfolgt, wenn der untere Abschnitt seine Fahrstellung eingenommen hat. Eine manuelle Betätigung dieser Feststellmittel ist lediglich erforderlich, um den unteren Abschnitt freizugeben und in seine Ladestellung bewegen zu können.

Die Feststellmittel können jedoch auch vollautomatisch wirksam ausgestaltet sein, z.B. in Form von Federn, beispielsweise Zug- oder Druckfedern, insbesondere beispielsweise Gasdruckfedern. Die Federn können vorteilhaft in Art einer Über-Totpunkt-Kinematik angelenkt sein, so dass sie in beiden Bewegungsrichtungen, jeweils nach Überwindung eines Totpunkts, sowohl in der Ladestellung als auch in der Fahrstellung eine stabile Endlage einnehmen und den unteren Abschnitt der Seitenverkleidung zuverlässig in seiner jeweils eingenommenen Stellung halten.

Die Erfindung ist nicht auf eine der vorbeschriebenen Ausführungsformen beschränkt, sondern in vielfältiger Weise abwandelbar. Sämtliche aus den Ansprüchen und der Beschreibung hervorgehenden Merkmale und Vorteile, einschließlich konstruktiver Einzelheiten, räumlicher Anordnungen und Verfahrenshinweisen, können sowohl für sich als auch in den verschiedensten Kombinationen erfindungswesentlich sein.

## Patentansprüche

1. Lkw-Fahrzeuganhänger,
mit einem Ladeboden
und Hinterrädern,
sowie mit einer Seitenverkleidung, die an der Längsseite des Fahrzeuganhängers tiefer als der Ladeboden angeordnet ist und sich in Längsrichtung bis vor die Hinterräder erstreckt,
**dadurch gekennzeichnet,**
**dass** die Seitenverkleidung einen oberen Abschnitt und einen unteren Abschnitt aufweist,
wobei der untere Abschnitt zwischen einer Fahrstellung, welche für den Fahrbetrieb des Fahrzeuganhängers bestimmt ist, und einer Ladestellung in der Art beweglich ist,
**dass** der untere Abschnitt aus seiner Fahrstellung weiter nach innen und / oder oben in seine Ladestellung verlagerbar ist.

2. Lkw-Fahrzeuganhänger nach Anspruch 1,
**dadurch gekennzeichnet,**
**dass** der untere Abschnitt fremdkraftunterstützt zwischen der Fahrstellung und der Ladestellung beweglich ist.

3. Lkw-Fahrzeuganhänger nach Anspruch 2,
**dadurch gekennzeichnet,**
**dass** der untere Abschnitt sensorgesteuert automatisch zwischen der Fahrstellung und der Ladestellung beweglich ist.

4. Lkw-Fahrzeuganhänger nach Anspruch 3,
**dadurch gekennzeichnet,**
**dass** der Lkw-Fahrzeuganhänger zur Mitnahme eines Mitnahmestaplers eingerichtet ist
und eine Aufnahme für den Mitnahmestapler aufweist,
sowie einen Sensor aufweist, der dazu eingerichtet ist, die An- oder Abwesenheit des Mitnahmestaplers in der Aufnahme zu erfassen.

5. Lkw-Fahrzeuganhänger nach einem der vorhergehenden Ansprüche,
**dadurch gekennzeichnet,**
**dass** zur Bewegung des unteren Abschnitts erforderliche Betätigungselemente in der Art ausgestaltet sind, dass sich der untere Abschnitt in der Fahrstellung befinden muss, um den Fahrbetrieb des Lkw-Fahrzeuganhängers zu ermöglichen.

6. Lkw-Fahrzeuganhänger nach einem der vorhergehenden Ansprüche,
**dadurch gekennzeichnet,**
**dass** der untere Abschnitt in seiner Fahrstellung mithilfe von Feststellmitteln festlegbar ist.

7. Lkw-Fahrzeuganhänger nach einem der vorhergehenden Ansprüche,
**dadurch gekennzeichnet,**
**dass** der untere Abschnitt weiter innen, in Richtung zur Längsmittelachse des Fahrzeuganhängers hin, als der obere Abschnitt der Seitenverkleidung verläuft.
